# EUROPÄISCHE PATENTSCHRIFT

(11) **EP 0 499 156 B1**
(45) Veröffentlichungstag und Bekanntmachung des Hinweises auf die Patenterteilung: **27.07.1994**
(21) Anmeldenummer: 92102042.6
(22) Anmeldetag: 07.02.1992
(51) Int. Cl.: F16H 1/45

(54) **Sperrdifferential für Antiblockiersystem**
Locking differential for antilock system
Différentiel de verrouillage pour système d'antiblocage

(30) Priorität: 14.02.1991 DE 4104484
(43) Veröffentlichungstag der Anmeldung: 19.08.1992
(73) Patentinhaber: ZF FRIEDRICHSHAFEN Aktiengesellschaft, 88038 Friedrichshafen (DE)
(72) Erfinder: Keller, Walter, W-7777 Salem 2 (DE); Sollbach, Gerhard, W-7990 Friedrichshafen (DE); Hill, Franz, W-7990 Friedrichshafen (DE); Schlitz, Robert, W-7770 Überlingen (DE)

(56) Entgegenhaltungen:
- DE-C- 1 126 691
- DE-U- 7 028 928
- US-A- 2 067 952

## Beschreibung

Die Erfindung betrifft ein selbstsperrendes Differentialgetriebe mit den Merkmalen:
- Das Differentialgetriebe ist ein Kegelzahnrad-Planetengetriebe.
- Ein Planetenträger treibt zwei Zentralräder mit gleicher Zähnezahl über Planetenachsen mit Planetenrädern.
- Je eine Reibkupplung verbindet jedes Zentralrad mit dem Planetenträger.
- Eine Drehkraft des Planetenträgers erzeugt über aufeinander wälzende und gleitende Zahnflanken von Zähnen der Planetenräder und der Zentralräder nach außen weisende und die Reibkupplungen schließende Axialkräfte der Zentralräder.

Mit zwei Arten von spreizenden Einrichtungen werden heute zwei Arten solcher Differentialgetriebe gebaut:

### 1. Art:

- Die Planetenräder und die Zentralräder bilden mit aufeinander abwälzenden und gleitenden Zahnflanken die spreizende Einrichtung.
- Die Zentralräder bilden die Schließglieder.

### 2. Art:

- Der Planetenträger treibt zwei Schließglieder.
- Die Schließglieder treiben über rampenförmige Mitnahmeflächen die Planetenachsen.
- Die Schließglieder und die Planetenachsen bilden mit den rampenförmigen Mitnahmeflächen die spreizende Einrichtung.
- Zwischen den Zentralrädern und dem Planetenträger sind Axiallager angeordnet.

Differentialgetriebe beider Arten sind bekannt (Prospekt F9/6SL806509 der ZF Passau).

Bei Differentialgetrieben beider Arten können die Reibkupplungen Lamellenkupplungen oder Kegelkupplungen sein. Der Planetenträger und die Zentralräder können selbst Lamellenträger (von Lamellenkupplungen) sein oder Kegelreibflächen (von Kegelkupplungen) tragen.

Ein solches Differentialgetriebe, eingebaut in ein Fahrzeug als Achsgetriebe einer Antriebsachse mit zwei Antriebsrädern, überträgt eine zusätzliche Drehkraft auf das noch greifende Antriebsrad, wenn das andere Antriebsrad auf rutschigem Boden durchdrehen will.

Differentialgetriebe der ersten Art sind billiger, weil die Zentralräder selbst als Schließglieder dienen und keine teuren zusätzlichen Bauteile als Schließglieder nötig sind. Sie wurden aber bisher wegen ihrer mangelhaften Laufruhe, die besonders am Lenkrad spürbar ist, nur dort verwendet, wo die Kosten wichtiger waren als der Fahrkomfort. In die meisten Fahrzeuge wurden daher Differentialgetriebe der zweiten Art eingebaut.

Mit der Einführung moderner Antiblockiersysteme (ABS) wurde ein anderer Unterschied für die Wahl zwischen den Differentialgetrieben beider Arten entscheidend: Die Reibkupplungen öffnen bei den Differentialgetrieben der ersten Art viel schneller als bei den Differentialgetrieben der zweiten Art. Das bedeutet bei einem schnellen, starken Fahrzeug beim plötzlichen Bremsen aus hoher Fahrgeschwindigkeit mit großer Motorleistung:
Nur bei einem Differentialgetriebe der ersten Art öffnen die Reibkupplungen so schnell, daß das ABS schnell genug allein die Bremskraft an jedem einzelnen Fahrzeugrad bestimmen (und damit ein Optimum an Lenkbarkeit und kurzem Bremsweg erreichen) kann, bevor das Fahrzeug ins Schleudern gerät.

Der Erfindung liegt die Aufgabe zugrunde, ein Differentialgetriebe der ersten Art mit möglichst großer Laufruhe zu schaffen.

Diese Aufgabe wird mit den Merkmalen nach Anspruch 1 der Erfindung gelöst:
Die Axialkraft eines Zentralrades und damit die Schließkraft und damit die Drehkraft der Reibkupplung wird durch die Axialkomponenten der Zahnkräfte an den Eingriffstellen mit den einzelnen Planetenrädern erzeugt. Die Schwankung dieser Axialkomponenten ist sehr groß, weil die Umkehr der Reibrichtung im Wälzpunkt den Unterschied zwischen dem Größtwert der Axialkomponente der Zahnkraft bei Eingriffsbeginn und dem Kleinstwert bei Eingriffsende noch wesentlich vergrößert. Wenn alle Planetenräder gleichzeitig eingreifen (Eingriffsbeginn), wird die Schwankung der Drehkraft der Reibkupplungen ebenso groß. Wenn jedoch je zwei Planetenräder zeitlich nacheinander eingreifen, wird die Schwankung der Drehkraft sehr viel kleiner und eine befriedigende Laufruhe des Differentialgetriebes erzielt.

Dies wird erreicht, wenn die Zahneingriffe von je zwei Planetenrädern mit dem selben, Zentralrad um eine halbe Zahnteilung zueinander versetzt sind (Anspruch 1).

Dieser versetzte Zahneingriff wird erreicht, wenn:
- das Differentialgetriebe zwei Planetenräder auf einer Planetenachse hat und die Zähnezahl der Zentralräder eine ungerade Zahl ist (Anspruch 2) oder
- das Differentialgetriebe vier Planetenräder auf zwei sich rechtwinklig kreuzenden Planetenachsen hat und die Zähnezahl der Zentralräder eine gerade Zahl, aber nicht durch vier teilbar ist (Anspruch 3) oder
- das Differentialgetriebe vier Planetenräder auf zwei sich fast rechtwinklig, mit einer Abweichung um ein Viertel einer Zahnteilung sich kreuzenden Planetenachsen hat und die Zähnezahl der Zentralräder eine ungerade Zahl ist (Anspruch 4) oder
- das Differentialgetriebe vier Planetenräder auf zwei sich fast rechtwinklig, mit einer Abweichung um eine halbe Zahnteilung sich kreuzenden Planetenachsen hat und die Zähnezahl der Zentralräder durch vier teilbar ist (Anspruch 5).

Wenn die Reibkupplungen Lamellenkupplungen sind und der Planetenträger und die Zentralräder Lamellenträger bilden, werden in bekannter Weise Kosten- und Lebensdauervorteile gewonnen, weil ebene Reibflächen und Blechteile billig, die Gesamtreibfläche groß und die Flächenpressung (Anpreßdruck) der Reibflächen gering sind (Anspruch 6).

Mit den außenkugeligen Rückenflächen der Zentralräder und den innenkegeligen oder -kugeligen Lagerflächen der Zwischenringe kann eine örtliche Überlastung und Schädigung der Reibflächen besser vermieden und damit die Lebensdauer des Differentialgetriebes erhöht werden, weil die Rückenfläche auf die Lagerfläche nur die Axialkraft, aber nicht die Kippkraft des Zentralrades übertragen kann (Anspruch 7).

Wenn der Zwischenring drehfest mit dem Planetenträger verbunden wird, gewinnt die Lamellenkupplung einen zusätzlichen Reibspalt (Anspruch 8). Der gleiche Vorteil ergibt sich, wenn der Zwischenring drehfest mit dem Zentralrad verbunden wird.

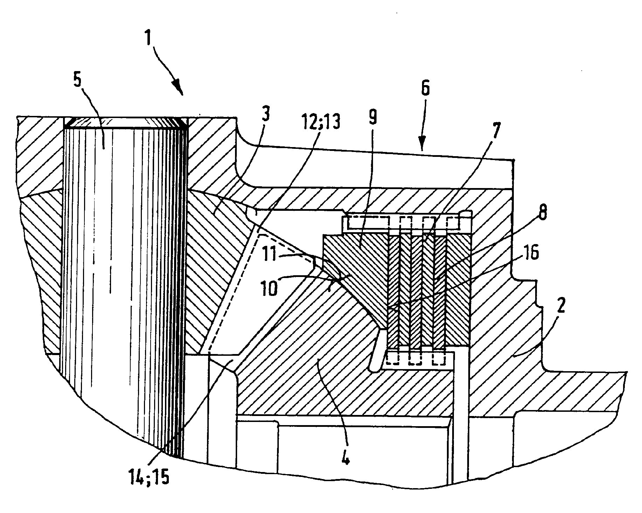

Die Zeichnung zeigt einen Ausschnitt aus einem Längsschnitt durch ein Differentialgetriebe nach der Erfindung.

Ein Planetenträger 2 des Differentialgetriebes 1 treibt über zwei Planetenräder 3 zwei Zentralräder 4. Die Planetenräder 3 und die Zentralräder 4 sind Kegelzahnräder. Die Planetenräder 3 laufen auf einer gemeinsamen Planetenachse 5, die in dem Planetenträger 2 befestigt ist. Je eine Reibkupplung 6 verbindet jedes Zentralrad 4 mit dem Planetenträger 2. Die zwei Reibkupplungen 6 sind Lamellenkupplungen. Der Planetenträger 2 bildet einen ersten Lamellenträger für erste Lamellen 7 der zwei Reibkupplungen 6. Die Zentralräder 4 bilden zwei zweite Lamellenträger für zweite Lamellen 8 der zwei Reibkupplungen 6. Die Lamellen 7, 8 sind axial zwischen den Zentralrädern 4 und dem Planetenträger 2 angeordnet. Je ein Zwischenring 9 ist axial zwischen jedem Zentralrad 4 und den Lamellen 7, 8 angeordnet. Die zwei Zwischenringe 9 sind wie die ersten Lamellen 7 drehfest mit dem Planetenträger 2 verbunden. Jeder Zwischenring 9 hat eine innenkegelige oder -kugelige Lagerfläche 10 für sein Zentralrad 4 und eine ebene Stirnfläche 16 für die benachbarte Lamelle 8. Das Zentralrad 4 hat eine zu der Lagerfläche 10 passende außenkugelige Rückenfläche 11. Eine Drehkraft des Planetenträgers 2 erzeugt über Zahnflanken 12 von Zähnen 13 der Planetenräder 3 und Zahnflanken 14 von Zähnen 15 der Zentralräder 4 nach außen weisende und die Reibkupplungen 6 schließende Axialkräfte der Zentralräder 4. Anders gesagt: Die Planetenräder 3 und die Zentralräder 4 bilden mit den aufeinander abwälzenden und gleitenden Zahnflanken 12, 14 ihrer Zähne 13, 15 eine bei relativer Drehung zwischen dem Planetenträger 2 und den Zentralrädern 4 axial spreizende Einrichtung, und die Zentralräder 4 bilden Schließglieder für ihre Reibkupplungen 6.

### Bezugszeichen

- 1: Differentialgetriebe
- 2: Planetenträger
- 3: Planetenrad
- 4: Zentralrad
- 5: Planetenachse
- 6: Reibkupplung
- 7: Lamelle
- 8: Lamelle
- 9: Zwischenring
- 10: Lagerfläche
- 11: Rückenfläche
- 12: Zahnflanke
- 13: Zahn
- 14: Zahnflanke
- 15: Zahn
- 16: Stirnfläche

## Patentansprüche

1. Selbstsperrendes Differentialgetriebe mit den Merkmalen:
- das Differentialgetriebe (1) ist ein Kegelzahnrad-Planetengetriebe;
- ein Planetenträger (2) treibt zwei Zentralräder (4) mit gleicher Zähnezahl über mindestens ein Paar von Planetenrädern (3);
- je eine Reibkupplung (6) verbindet jedes Zentralrad (4) mit dem Planetenträger (2);
- eine Drehkraft des Planetenträgers (2) erzeugt über aufeinander wälzende und gleitende Zahnflanken (12, 14) von Zähnen (13, 15) der Planetenräder (3) und der Zentralräder (4) nach außen weisende und die Reibkupplungen (6) schließende Axialkräfte der Zentralräder (4);
- jedes Planetenrad (3) hat mit jedem Zentralrad (4) einen Zahneingriff;
**gekennzeichnet** durch das Merkmal: die Zahneingriffe von je zwei Planetenrädern (3) mit dem selben Zentralrad (4) sind um eine halbe Zahnteilung zueinander versetzt.

2. Differentialgetriebe nach Anspruch 1 mit den Merkmalen:
- das Differentialgetriebe (1) hat zwei Planetenräder (3) auf einer Planetenachse (5);
- die Zähnezahl der Zentralräder (4) ist eine ungerade Zahl.

3. Differentialgetriebe nach Anspruch 1 mit den Merkmalen:
- das Differentialgetriebe (1) hat vier Planetenräder (3) auf zwei Planetenachsen (5);
- die Zähnezahl der Zentralräder (4) ist eine gerade Zahl, aber nicht durch vier teilbar;
- die Planetenachsen (5) kreuzen sich rechtwinklig.

4. Differentialgetriebe nach Anspruch 1 mit den Merkmalen:
- das Differentialgetriebe (1) hat vier Planetenräder (3) auf zwei Planetenachsen (5);
- die Zähnezahl der Zentralräder (4) ist eine ungerade Zahl;
- die Planetenachsen (5) kreuzen sich fast rechtwinklig, mit einer Abweichung um ein Viertel einer Zahnteilung.

5. Differentialgetriebe nach Anspruch 1 mit den Merkmalen:
- das Differentialgetriebe (1) hat vier Planetenräder (3) auf zwei Planetenachsen (5);
- die Zähnezahl der Zentralräder (4) ist durch vier teilbar;
- die Planetenachsen (5) kreuzen sich fast rechtwinklig, mit einer Abweichung um eine halbe Zahnteilung.

6. Differentialgetriebe nach Anspruch 1 mit den Merkmalen:
- die Reibkupplungen (6) sind Lamellenkupplungen;
- der Planetenträger (2) bildet einen ersten Lamellenträger für erste Lamellen (7);
- die Zentralräder (4) bilden zwei zweite Lamellenträger für zweite Lamellen (8).

7. Differentialgetriebe nach Anspruch 1 mit den Merkmalen:
- jedes Zentralrad (4) hat eine außenkugelige Rückenfläche (11);
- zwischen dem Zentralrad (4) und den Lamellen (7, 8) ist ein Zwischenring (9) angeordnet;
- der Zwischenring (9) hat eine innenkegelige oder -kugelige Lagerfläche (10) für die Rückenfläche (11) des Zentralrades (4) und eine ebene Stirnfläche (16) für die benachbarte Lamelle (8).

8. Differentialgetriebe nach Anspruch 7 mit dem Merkmal:
- der Zwischenring (9) ist drehfest mit dem Planetenträger (2) verbunden.

## Claims

1. Self-locking differential gear having the features:
- the differential gear (1) is a planetary gear having conical gearwheels;
- a sun wheel (2) drives two central wheels (4) having the same number of teeth via at least one pair of planet wheels (3);
- a respective friction clutch (6) connects each central wheel (4) to the sun wheel (2);
- a rotatory force of the sun wheel (2), by making the sides (12, 14) of the teeth (13, 15) of the planet wheels (3) and the central wheels (4) roll and slide over one another, generates outward axial forces of the central wheels (4), which forces close the friction clutches (6);
- each planet wheel (3) meshes with each central wheel (4);
characterised by the feature:
the meshing of every two planet wheels (3) with the same central wheel (4) is offset by half a tooth division.

2. Differential gear according to claim 1 having the features:
- the differential gear (1) has two planet wheels (3) on one planet axis (5);
- the number of teeth of the central wheels (4) is uneven.

3. Differential gear according to claim 1 having the features:
- the differential gear (1) has four planet wheels (3) on two planet axes (5);
- the number of teeth of the central wheels (4) is an even number, but is not divisible by four;
- the planet axes (5) intersect at right angles.

4. Differential gear according to claim 1 having the features:
- the differential gear (1) has four planet wheels (3) on two planet axes (5);
- the number of teeth of the central wheels (4) is an uneven number;
- the planetary axes (5) intersect almost at right angles with a deviation of one quarter of a tooth division.

5. Differential gear according to claim 1 having the features:
- the differential gear (1) has four planet wheels (3) on two planet axes (5);
- the number of teeth of the central wheels (4) is divisible by four;
- the planet axes (5) intersect almost at right angles with a deviation of one half-of a tooth division.

6. Differential gear according to claim 1 having the features:
- the friction clutches (6) are disc clutches;
- the sun wheel (2) forms a first disc carrier for first discs (7);
- the central wheels (4) form two second disc carriers for second discs (8).

7. Differential gear according to claim 1 having the features:
- each central wheel (4) has a convex spherical rear face (11);
- an intermediate ring (9) is disposed between the central wheel (4) and the discs (7,8);
- the intermediate ring (9) has a concave conical or spherical bearing face (10) for the rear face (11) of the central wheel (4) and a plane end face (16) for the adjacent disc (8).

8. Differential gear according to claim 7 having the feature:
- the intermediate ring (9) is fixed non-rotatably to the sun wheel (2).

## Revendications

1. Différentiel autobloquant dans lequel :
- le différentiel (1) est un engrenage planétaire à pignons coniques;
- un porte-satellites (2) entraîne deux planétaires (4) de même nombre de dents au moyen d'au moins une paire de satellites (3);
- chaque planétaire (4) est couplé au porte-satellites (2) par son propre embrayage à friction (6);
- une force de rotation du porte-satellites (2) engendre sur les planétaires (4) des forces axiales dirigées vers l'extérieur et fermant les embrayages à friction (6), par l'entremise de flancs (12, 14) des dents (13, 15) des satellites (3) et des planétaires (4), ces flancs roulant et glissant les uns sur les autres;
- chaque satellite (3) est engrené sur chaque planétaire (4),
**caractérisé** en ce que les engrènements de deux satellites (3) sur le même planétaire (4) sont décalés d'une moitié du pas de l'engrenage.

2. Différentiel selon la revendication 1, dans lequel :
- le différentiel (1) comporte deux satellites (3) sur un axe de satellites (5);
- le nombre de dents des planétaires (4) est un nombre impair.

3. Différentiel selon la revendication 1, dans lequel :
- le différentiel (1) comporte quatre satellites (3) sur deux axes de satellites (5);
- le nombre de dents des planétaires (4) est un nombre pair non divisible par quatre ;
- les axes de satellites (5) se croisent à angle droit.

4. Différentiel selon la revendication 1, dans lequel :
- le différentiel (1) comporte quatre satellites (3) sur deux axes de satellites (5);
- le nombre de dents des planétaires (4) est un nombre impair;
- les axes de satellites (5) se croisent presque à angle droit, avec un décalage d'un quart du pas de l'engrenage.

5. Différentiel selon la revendication 1, dans lequel :
- le différentiel (1) comporte quatre satellites (3) sur deux axes de satellites (5);
- le nombre de dents des planétaires (4) est divisible par quatre;
- les axes de satellites (5) se croisent presque à angle droit, avec un décalage d'une moitié du pas de l'engrenage.

6. Différentiel selon la revendication 1, dans lequel :
- les embrayages à friction (6) sont à disques multiples;
- le porte-satellites (2) constitue un premier porte-disques pour des premiers disques (7);
- les planétaires (4) constituent deux seconds porte-disques pour des seconds disques (8).

7. Différentiel selon la revendication 1, dans lequel :
- chaque planétaire (4) a une surface postérieure sphérique convexe (11);
- un anneau intermédiaire (9) est disposé entre le planétaire (4) et les disques (7, 8);
- l'anneau intermédiaire (9) a une surface concave conique ou sphérique (10) servant d'appui pour la surface postérieure (11) du planétaire (4) et une surface frontale plane (16) servant d'appui pour le disque adjacent (8).

8. Différentiel selon la revendication 7, dans lequel :
- l'anneau intermédiaire (9) est solidaire en rotation du porte-satellites (2).
